# EUROPEAN PATENT APPLICATION

(11) **EP 2 928 120 A2**
(43) Date of publication of application: **07.10.2015**
(21) Application number: 15162475.6
(22) Date of filing: 02.04.2015
(51) Int. Cl.: H04L 12/26, H04N 21/61

(54) **A PORTABLE TESTING APPARATUS AND METHOD**

(30) Priority: 04.04.2014 GB 201406170
(71) Applicant: Regenersis (Glenrothes) Ltd., London W1U 2RP (GB)
(72) Inventor: Radford, Cameron, Glenrothes, Fife KY7 4UA (GB); Devine, Stephen, Glenrothes, Fife KY7 4UA (GB)
(74) Representative: Hargreaves, Timothy Edward

(57) **Abstract**

A portable test apparatus for testing a commodity, the commodity comprising a cable modem, router and/or set top box, wherein the commodity is configured for connection to a cable network, the portable test apparatus comprising a cable modem termination system (CMTS), and an attenuator, wherein the CMTS is configured to provide a signal to the commodity under test over a connecting cable, and the attenuator is configured to attenuate the signal level from the CMTS such that when the commodity receives the signal from the CMTS over the connecting cable, at least one characteristic of the signal received over the connecting cable simulates at least one operating signal characteristic of the cable network for connection to which the commodity is configured.

## Description

### Field of the invention

The present invention relates to a portable testing apparatus and method for testing communications apparatus, for example set top boxes, cable modems and/or routers, and/or for testing broadband connections in a cable network.

### Background to the invention

Information services may be provided to users by a variety of routes, for example by cable, over telephone lines or via cellular networks. In areas where a cable television service is available, it is common for data services to be offered over the same cable as television services, using the DOCSIS (Data Over Cable Service Interface Specification) standard to connect a cable modem/router in the home to a remote head end comprising a CMTS (cable modem termination system) and thereby to the Internet.

The delivery of digital television, telephony and broadband services to the home has resulted in a significant increase in the technical complexity of the commodities used to convey these services to the customer. Such commodities within a typical home infrastructure may include, for example, a cable modem/router for internet access and a set top box or set top boxes for delivery of digital television content.

The set top box and cable modem/router may be provided by a service provider as part of a subscription package provided to a subscriber. In some cases, the cable modem/router may be integrated into the set top box.

The service provider may retain ownership of the set top box and/or cable modem/router and may be responsible for maintenance and replacement of the set top box in the event of faults.

In the instance of a suspected fault being reported by the customer, the traditional service model has been for the service provider to send a field technician to the customer's home to attempt to identify the cause of the failure. The diagnostics process could result in the replacement of the set top box, the cable modem/router, or both the set top box and the cable modem/router.

After replacement of the set top box and/or cable modem/router, the removed set top box and/or cable modem/router are usually returned to a central depot where they are extensively tested and subsequently refurbished. If the testing of a set top box or cable modem/router reveals that there is no fault, or that the fault is easy to rectify, the set top box or cable modem/router can then be provided to another user, subject to replacement of the outer casing if necessary.

A significant number of the returned commodities are determined to be No Fault Found (NFF) when tested at the central facility.

The annualised cost to the operator of transporting, testing and refurbishing the NFF units may be considerable. The process may be at best inconvenient to the customer, who risks losing their stored favourites configuration and stored video content from their removed set top box and/or their stored settings from the cable modem/router.

When a customer's set top box or cable modem/router is sent to the central testing facility and replaced with a replacement unit, the replacement set top box or cable modem/router that is provided to the customer may be set to factory default settings. The customer may then have to configure the replacement unit to his or her own preferences. If the customer's original unit proves to have no fault when tested at the central facility, the inconvenience that the customer experiences in having to configure the replacement unit with his or her preferred settings and/or losing stored content is unnecessary.

Performance of a set top box or cable modem/router may depend on numerous factors in the customer's home environment, for example network conditions, positioning of a cable modem/router relative to a device that is attempting to connect with it wirelessly, or interference from further equipment. By removing the set top box or cable modem/router from the customer's home, it may become more difficult to replicate faults and to correctly diagnose the source of a perceived problem.

Additionally, transportation to a central depot may induce additional faults in a set top box or cable modem/router, for example due to the equipment being subjected to vibration or shock during transportation, or due to the disconnection and reconnection of cables.

Therefore there are a number of disadvantages to removing a set top box and/or cable modem/router for test at a remote location.

Factory test equipment for testing set top boxes, used in a central test facility or depot, usually comprises a large piece or pieces of test equipment which is usually in a fixed configuration in a factory or other test facility. Such test equipment can be large, heavy, expensive and/or consist of multiple connected devices, for example racks of servers and/or processors, desk-mounted PCs or similar terminals and associated displays, and networks of wiring around the facility or depot connecting servers, devices under test and PCs or similar terminals.

In contrast, a portable test apparatus for testing of set top boxes in the home has been described in European Patent Application EP 2587822.

Commodities present in the homes of different users may be of different makes and models and may operate under different specifications. For example, cables modems/routers may operate using different modulation schemes. Furthermore, different cable network operators may use different specifications, settings or protocols.

A test apparatus may provide test signals with particular characteristics, for example with a particular input signal level. However, such an apparatus may be limited to test of a particular commodity or range of commodities, or to test of commodities that are configured to operate with a particular cable network provider.

It is known to test the speed of a broadband connection by running a broadband speed test program on a PC, laptop, or other computer that is connected to the broadband connection. One known method of broadband speed testing is to use a Flash application to download a file or files from a network server. The Flash application provides broadband speed information which is displayed on the computer. Broadband speed testing using such a Flash application may be provided by, for example, dedicated broadband speed testing websites. However, the method of the broadband speed test may not be transparent to the tester, who may have no way of knowing how the calculation of the broadband speed has been performed.

In its calculation of broadband speed, a Flash application may make certain assumptions about the device (for example, PC or laptop) that is being used to perform the broadband speed test. The assumptions made by the Flash application may be incorrect, particularly when the device being used is not a device such as a PC or laptop but instead is a specialised test apparatus. For example, the Flash application may incorrectly determine the stream capabilities of the test apparatus.

In the case of proprietary Flash applications, if the tester suspects that the result of the test is not accurate, it may be difficult for the tester to verify the result. This may be a particular disadvantage when the tester is providing the test results to a third party, for example a cable network provider, because the tester may not be able to prove that the test is accurate if they have no access to the method of calculation.

Furthermore, broadband speed testing performed using a Flash application requires the use of a test device (for example, a PC or laptop) that is configured to use Flash. Flash may not be available for small processors, embedded operating systems, or mobile devices and therefore may limit the use of broadband speed testing on small and/or mobile devices. Furthermore, Flash may use an undesirable amount of memory or slow the processing by the device in an undesirable fashion.

A Flash broadband speed testing application may download large test files and write the downloaded test files to memory, for example to flash memory. Writing the test files to memory may slow the speed of the download or degrade the quality of the download, for example resulting in dropped packets.

### Summary

In a first, independent aspect of the invention there is provided a portable test apparatus for determining a download speed of a cable modem and/or router connected to a cable network, comprising a processor configured to perform a test, the test comprising connecting to a remote server over the cable network, downloading a test file from the remote server, discarding data from the downloaded test file during performance of the test, acquiring download statistics for the download of the test file, wherein the download statistics comprise a plurality of download measurements, each download measurement associated with a respective time interval, storing the acquired download statistics to memory, and determining a download speed by processing the stored download statistics.

The memory may comprise volatile memory. The download speed may comprise broadband download speed, and the test may comprise a broadband test.

By using a portable test apparatus, it is possible to test the broadband speed experienced by a customer in, for example, the customer's home or place of business. The cable modem and/or router may be connected to the cable network to which it is normally connected when in use. The portable test apparatus can then measure the broadband speed over the network through the cable modem and/or router.

The determined broadband download speed may comprise for example an average download speed, an overall download speed, a median or mode download speed, for instance in respect of the download of the test file in question.

Discarding data from the downloaded test file during performance of the test may comprise discarding data from the test file before completion of the download of the test file.

Discarding data from the downloaded test file during performance of the test may ensure that the speed of the download is not limited by the process of writing the test file to memory, for example writing the test file to flash memory. Storing the acquired download statistics to volatile memory (for example, a RAM drive) may ensure that the speed of the download is not limited by the process of writing the download statistics to memory.

Discarding data from the downloaded test file may comprise writing the downloaded test file to a file that discards data from it. Discarding data from the downloaded test file may comprise writing the test file to a null drive or null file.

The volatile memory may comprise RAM. The volatile memory may comprise a RAM drive.

The download statistics may comprise download statistics from a TCP/IP stack. The download statistics may comprise real-time download statistics. By acquiring real-time statistics, the broadband download speed may be calculated while downloads are ongoing.

The broadband download speed may be determined by applying an algorithm to the stored download statistics.

Each download measurement may comprise at least one of a download volume for the associated time interval and a download speed for the associated time interval. A download volume may represent an amount of data, for example a download volume for a particular associated time interval may represent the amount of data downloaded during that associated time interval.

The portable test apparatus may further comprise a buffer. Processing the stored download statistics may comprise processing the stored download statistics in dependence on at least one characteristic of the buffer. The at least one characteristic of the buffer may comprise at least one of a buffer size, a buffer configuration, a buffer fill speed, a buffer empty speed, a buffer delay, a measured characteristic of the buffer.

By processing the download statistics in dependence on a characteristic of the buffer, speed fluctuations due to the buffer may be substantially removed in calculating an overall or representative broadband download speed.

The buffer may comprise at least one of a software buffer and a hardware buffer. The buffer may comprise a FIFO (first-in first-out buffer). An algorithm for processing the stored download statistics may be tailored to the performance characteristics of the FIFO. By tailoring the algorithm to the individual FIFO, speed fluctuations due to the FIFO may be substantially removed in calculating an overall or representative broadband download speed.

Processing the stored download statistics may comprise ordering the plurality of download measurements. The plurality of measurements of download volume may be ordered by at least one of download volume and download speed.

When a file starts to download, the file transfer may be slower than later in the download. The initial download speed may not be representative of the transfer as a whole. Therefore it may be desirable to sort the download statistics by speed, or, equivalently, by volume per unit time (for example, volume per time interval).

Processing the stored download statistics may comprise taking a median, mode or average of the plurality of download measurements. Processing the stored download statistics may comprise applying a filter to the download measurements. The filter may comprise a smoothing filter. The smoothing filter may comprise a Savitsky-Golay filter.

Processing the download statistics may comprise taking at least one of a median of the download volume for the plurality of measurements, a mode of the download volume for the plurality of measurements, a median of the download speed for the plurality of measurements and a mode of the download speed for the plurality of measurements. Taking a median or mode value for the download volume or download speed may under some conditions provide a representative value for broadband download speed.

At least one of following stages may be performed using Wget: the connecting to a remote server over the cable network; the downloading of a test file from the remote server; the discarding of data from the downloaded test file during performance of the test; the acquiring of the download statistics for the download of the test file; or the storing of the acquired download statistics to memory.

The test may further comprise downloading at least one further test file from the remote server. Determining the download speed may comprise determining a respective download speed for the download of each of the test files and combining the determined respective download speeds. Using more than one test file may in some situations provide increased accuracy in determining the download speed. The significance of outlier results may be reduced.

The test may further comprise downloading a test file from each of a plurality of remote servers. Determining a download speed may comprise determining a respective download speed for the download of the test file from each of the remote servers, and combining the determined respective download speeds. By connecting to more than one remote server, it may be possible to more accurately represent network conditions when calculating the speed. For example, if the transfer from one network server is abnormally slow, it may be compensated by the results from one or more further servers.

The test may further comprise at least one of storing the determined download speed in memory and transmitting the determined speed to a remote processing resource, for example a central test server.

The test apparatus may further comprise means for wirelessly transmitting data representative of the results of the test.

By storing and/or transmitting the details of results in addition to whether a unit has passed or failed, extra analysis of the result may be performed. By transmitting results to a central test server, results of many broadband speed tests may be aggregated and the resulting data may be used for example, to profile broadband speeds available on a cable network. For example, broadband speeds may be determined at a number of homes in a particular neighbourhood, and the results transmitted to the central test server. The central test server may then determine whether broadband speeds are consistent across the neighbourhood or whether certain locations are unusually slow.

The apparatus may be further configured to perform an upload speed test, the upload speed test comprising uploading an upload test file to the remote server, acquiring upload statistics, wherein the upload statistics comprise a plurality of upload measurements, each upload measurement associated with a respective time interval, storing the acquired upload statistics to memory, and determining a upload speed by processing the stored upload statistics.

The upload speed test may comprise a broadband upload speed test. The upload speed may comprise a broadband upload speed. The memory may comprise volatile memory.

Both download and upload speeds may be calculated, displayed to a test operator, and/or stored in memory.

In another independent aspect of the invention is provided a method for determining a download speed of a cable modem and/or router connected to a cable network, by performing a test, the test comprising connecting to a remote server over the cable network, downloading a test file from the remote server, discarding data from the downloaded test file during performance of the test, acquiring download statistics for the download of the test file, wherein the download statistics comprise a plurality of download measurements, each download measurement associated with a respective time interval, storing the acquired download statistics to memory, and determining a download speed by processing the stored download statistics.

The download speed may comprise broadband download speed. The test may comprise a broadband test. The memory may comprise volatile memory.

In a further independent aspect of the invention is provided a computer program product executable to perform a method for determining a download speed of a cable modem and/or router connected to a cable network, by performing a test, the test comprising connecting to a remote server over the cable network, downloading a test file from the remote server, discarding data from the downloaded test file during performance of the test, acquiring download statistics for the download of the test file, wherein the download statistics comprise a plurality of download measurements, each download measurement associated with a respective time interval, storing the acquired download statistics to memory, optionally volatile memory; and determining a download speed by processing the stored download statistics.

In another independent aspect of the invention there is provided a portable test apparatus for testing a commodity, wherein the commodity is configured for connection to a cable network, the portable test apparatus comprising a cable modem termination system (CMTS) and an attenuator, optionally a reconfigurable attenuator, wherein the CMTS is configured to provide a signal to the commodity under test over a connecting cable, and the attenuator is configured to attenuate the signal level from the CMTS such that when the commodity receives the signal from the CMTS over the connecting cable, at least one characteristic of the signal received over the connecting cable simulates at least one operating signal characteristic of the cable network for connection to which the commodity is configured.

The commodity may comprise a cable modem and/or router and/or a set top box. The commodity may be a home commodity, for example a commodity installed in a user's home. The portable test apparatus may be configured to perform the testing in a user's home or in other location in which the commodity is installed for normal use, for example an office, shop, cafe or public space.

The at least one characteristic may comprise power level or power as a function of frequency.

In normal operation, the characteristics of the cable connection (e.g. connection to a cable network) to which the commodity is connected, such as the input signal level (for example in dBmV), may be within a range that is specified by, for example, a cable network provider. For testing the commodity, the portable test apparatus may simulate an input signal that may be received by the commodity. Content may be provided from the CMTS, and signal characteristics such as the power level or power level as a function of frequency may be specified. By providing that the signal level is at a level similar to that experienced in normal use, it may be possible to ensure that the testing produces a realistic assessment under conditions to those normally experienced when connected to the cable network.

The attenuator may be configured to attenuate the signal level according to at least one attenuation configuration. The or each attenuation configuration may represent attenuation as a function of frequency. Attenuation of a signal level according to the at least one attenuation configuration may comprise applying a frequency-dependent attenuation.

The attenuator may be configured to attenuate the signal level according to a selected one of a plurality of attenuation configurations.

The apparatus may be further configured to store the plurality of attenuation configurations.

Each of the plurality of attenuation configurations may correspond to a different modulation scheme.

Each of the plurality of attenuation configurations may correspond to a different cable network provider.

The attenuator may be configured to attenuate the signal level in dependence on a curve of allowable signal level versus frequency (calibration curve).

The attenuator may be configured to automatically change the attenuation when the frequency changes.

The apparatus may further comprise a controller. The controller may be configured to select one of the plurality of attenuation configurations automatically based on information received from the home commodity.

The attenuator may be configured to provide a plurality of attenuation configurations. The controller may be configured to select an attenuation configuration from the plurality of attenuation configurations and to instruct the attenuator to attenuate the signal level in accordance with the selected attenuation configuration.

Each of the plurality of attenuation configurations may correspond to a different modulation scheme. Each of the plurality of attenuation configurations may correspond to a different cable network provider.

The attenuator may be configured with multiple attenuation settings corresponding to different modulation schemes and/or different cable network providers. By providing multiple attenuation settings, the portable test apparatus may be used more flexibly and to test a wider range of equipment than if it had a single set of fixed attenuation settings.

The portable test apparatus may further comprise a user interface configured to allow a test operator to select one of the stored attenuation configurations.

The controller may select one of the plurality of attenuation configurations based on at least one of information received from the cable modem and/or router and a user command.

The attenuation configuration may be selected based on information received from the cable modem and/or router, for example information regarding the modulation scheme, or based on information received from a test operator.

The controller may select one of the plurality of attenuation configurations automatically based on information received from the cable modem/router.

The or each attenuation configuration may be determined for a particular portable test apparatus by calibration specific to that portable test apparatus. A further attenuation configuration or further attenuation configurations may be determined during re-calibration of the portable test unit after opening the housing of the portable test apparatus.

The attenuator may comprise an attenuator that is at least partially implemented in software. The attenuator may comprise a programmable attenuator.

The attenuator may be configured to attenuate the signal level over a frequency range of at least 50 MHz to 860 MHz.

In another independent aspect of the invention, there is provided a method for testing a commodity, the commodity comprising a cable modem, router and/or set top box, wherein the commodity is configured for connection to a cable network, the method comprising provide a signal to the commodity under test from a cable modem termination system (CMTS) over a connecting cable, and attenuating the signal level from the CMTS such that when the commodity receives the signal from the CMTS over the connecting cable, the characteristics of the signal received over the connecting cable simulate the operating signal characteristics of the cable network for connection to which the commodity is configured. The commodity may comprise a home commodity

In a further, independent aspect of the invention, there is provided a computer program product executable to perform a method for testing a commodity, the commodity comprising a cable modem, router and/or set top box, wherein the commodity is configured for connection to a cable network, the method comprising provide a signal to the commodity under test from a cable modem termination system (CMTS) over a connecting cable, and attenuating the signal level from the CMTS such that when the commodity receives the signal from the CMTS over the connecting cable, the characteristics of the signal received over the connecting cable simulate the operating signal characteristics of the cable network for connection to which the commodity is configured.

In another independent aspect of the invention, there is provided a portable test apparatus for testing a set top box and/or a cable modem and/or a router, comprising a controller for controlling a test procedure, a stream player for providing test content for set top box testing, a CMTS for communicating with a set top box and/or a cable modem and/or a router, and an attenuation unit comprising an attenuator configured to attenuate the signal level output from the CMTS.

The controller, stream player, CMTS and attenuation unit may be housed in a single housing. The single housing may be suitable for carrying by a user, for example carrying in a shoulder bag or other container that can be carried by a user.

The CMTS may be configured for low-power operation. Low-power operation of the CMTS may comprise operation requiring power in the range 0.1W to 100W, optionally 1W to 75W, optionally 10W to 50W. Low-power operation may comprise operation requiring power of less than 100W, optionally less than 50W, optionally less than 10W.

By providing a single apparatus configured to test both set top boxes and cable modems/routers, more commodities can be testing in situ in a customer's home or place of business. Cable modem/router test facilities may efficiently be provided by using the controller, CMTS and attenuator that are also required for set top box testing. Automatic and objective testing of set top boxes and cable modems/routers may be provided using a single piece of test equipment.

By providing a CMTS that is configured for low-power operation, the size and power requirements of the test apparatus may be suitable for portable operation.

The apparatus may further comprise a processor configured to perform broadband speed testing.

By providing a single apparatus configured to test broadband speed as well as set top box and cable modem/router performance, improved fault finding is provided. A test operator may be better able to establish whether an observed problem is due to customer equipment (a set top box or a cable modem/router) or the broadband connection provided over a cable network.

The apparatus may further comprise a user interface for communicating instructions to a test operator and/or receiving inputs from a test operator.

The test apparatus may be configured so that it can be operated by, for example, operators of a service provider rather than operators of an OEM or a dedicated testing facility.

The test apparatus may further comprise means for wirelessly transmitting data representative of the results of one or more test procedures performed using the test apparatus.

The CMTS may be configured to provide a signal to the cable modem/router under test over a connecting cable, and the attenuator may be configured to attenuate the signal level from the CMTS such that when the cable modem/router receives the signal from the CMTS over the connecting cable, the characteristics of the signal received over the connecting cable simulate the characteristics of the cable connection to which the cable modem/router is connected in normal operation.

There may also be provided an apparatus, method or computer program product substantially as described herein with reference to the accompanying drawings.

Any feature in one aspect of the invention may be applied to other aspects of the invention, in any appropriate combination. For example, apparatus features may be applied to method features and vice versa.

### Detailed description of embodiments

Embodiments of the invention are now described, by way of non-limiting example, and are illustrated in the following figures, in which:-
Figure 1 is an illustration of an embodiment of a portable test apparatus being transported by an operator;
Figure 2 is a schematic diagram of a portable test apparatus according to an embodiment;
Figure 3 is an example of a calibration curve;
Figure 4 is a schematic diagram showing connections to an attenuation unit according to an embodiment;
Figure 5 is a flow chart illustrating in overview a test process performed in accordance with an embodiment;
Figure 6 is an example of a home page screen display;
Figure 7 is a flow chart illustrating in overview a cable modem/router test process performed in accordance with an embodiment;
Figure 8 is a schematic diagram illustrating one configuration for cable modem/router testing;
Figure 9 is an example of a modem selection screen display;
Figure 10 is an example of a broadband speed test screen display; and
Figure 11 is a flow chart illustrating in overview the process of data passing through a FIFO.

In an embodiment, a portable test apparatus 10 is configured to be capable of testing cable modems/routers 40 and set top boxes 50, and to be capable of performing broadband speed testing on a cable network.

To address the challenge of reducing the number of No Fault Found (NFF) units being returned to the central facility for test, a test process has been designed and integrated into a form factor that is portable. This portable test system (also referred to as an In Field Test or IFT unit) is made available to field technicians so that they may undertake at least the same level of testing in the consumer's home as that which is adopted in a central test facility, therefore eliminating the need for removal of an NFF unit.

As noted above, known factory test equipment for testing set top boxes, used in a central test facility or depot, usually comprises a large piece or pieces of test equipment which is usually in a fixed configuration in a factory or other test facility. Such test equipment can be large, heavy, expensive and/or consist of multiple connected devices, for example rack-mounted units such as servers and/or processors, desk-mounted PCs or similar terminals and associated displays, and networks of wiring around the facility or depot connecting servers, devices under test and operator PCs or similar terminals.

In contrast, portable test apparatus 10 of an embodiment may be used to test a cable modem/router 40 and/or set top box 50 in a customer's home or place of business, or in any other location where it may be desirable to test a cable modem/router 40 and/or set top box 50 in situ at its normal place of operation, rather than removing it to a central depot. Portable test apparatus 10 may also be used to test the speed of a broadband connection in a customer's home or place of business or other location.

By testing a cable modem/router 40 and/or set top box 50 in situ using the portable test apparatus 10, unnecessary transportation of the cable modem/router 40 or set top box 50 to a central test facility can be avoided. Such transportation can cause damage to the cable modem/router 40 or set top box 50 that may cause it to fail a test or tests that it would have passed if left in situ.

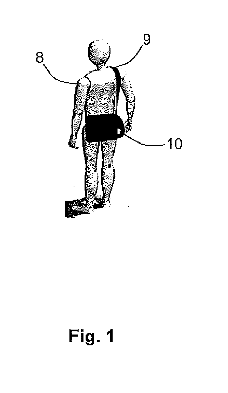

Figure 1 shows the size and shape of one embodiment of the portable test apparatus 10, which may be carried by an operator 8 using carry strap 9.

The test infrastructure of portable test apparatus 10 comprises a test platform (controller 14) which performs the stimulus and analysis of the product under test (cable modem/router 40 or set top box 50), and a head end 22 which delivers the communications interface to the unit under test and also delivers a reference signal stream where necessary for test execution.

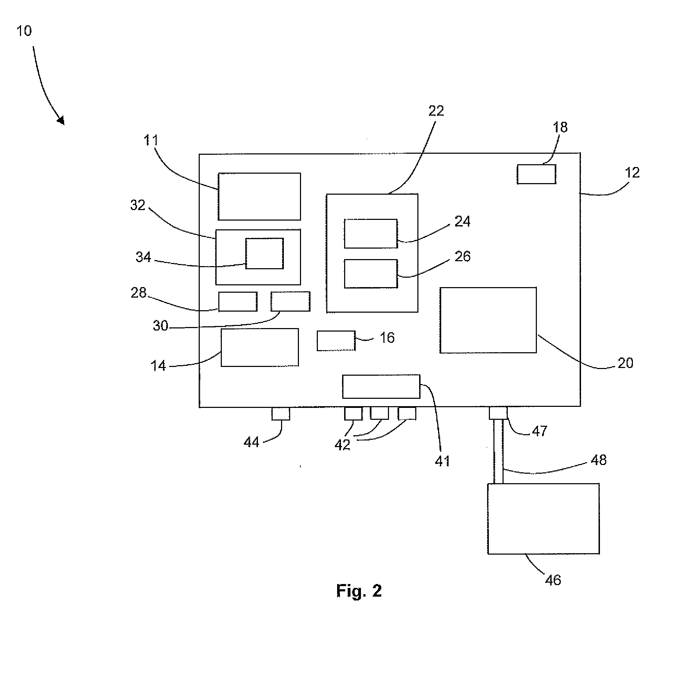

A portable test apparatus 10 according to an embodiment is illustrated schematically in Figure 2. The components of the portable test apparatus 10 are included in a single housing 12, enabling transport to and from a test location, such as a customer's home. Figure 2 provides a schematic diagram of components inside the portable test apparatus 2 according to an embodiment. Figure 2 does not represent any connections between the internal components.

In the present embodiment, the portable test apparatus 20 comprises a power supply (PSU) 11 which provides power to the unit from a mains power connection. In the present embodiment, the portable test apparatus 10 comprises a controller 14 that includes dedicated test and control software. The controller 14 initiates and controls the tests that may be performed by the portable test apparatus 10. The controller controls the user interface, receives inputs from the user via the user inputs then controls performance of the tests by the other components.

The portable test apparatus 10 further comprises a memory 16. In the present embodiment, the controller 14 is connected to the memory 16.

The portable test apparatus further comprises a GSM/GPRS module 18 and associated antenna that is operable to transmit data to a remote server (which may be called a central server) or other device.

In the present embodiment, the controller 14 stores test results temporarily in memory 16 before transmitting the test results to a central server using the GSM/GPRS module 18, or over a network connection, which may be cabled or wireless. The test results are then stored and processed by the central server.

In the present embodiment, the portable test apparatus 10 further comprises a display screen 20 for display of an operator interface. In the present embodiment, the display screen 20 is a touch screen which allows the operator to provide inputs through display screen 20, for example by selecting icons. In alternative embodiments, a separate operator input device is provided, for example a keyboard. In the present embodiment, the controller 14 controls the display of the operator interface on display screen 20 and receives any operator inputs provided through the touch screen functionality.

The portable test apparatus 10 further comprises a head end 22 which comprises a CMTS 24 and a stream player 26. The CMTS 24 and stream player 26 are connected to the controller 14, and may receive commands from the controller 14 as part of the test process.

In normal operation of a cable modem/router 40 or set top box 50, the cable modem/router 40 or set top box 50 is connected by a cable network to a head end at a remote location. The head end at the remote location may be used to service hundreds or thousands of homes.

The head end 22 of the portable test apparatus 10 is configured for testing only one cable modem/router 40 or set top box 50 at any given time. Therefore, the CMTS 24 of head end 22 of the present embodiment is designed with considerably reduced power when compared with a conventional head end that may be used at a remote location. In the present embodiment, the power requirement of the CMTS 24 in the portable test apparatus 10 is 38 W compared to 700 W for a standard CMTS that may be used in a remote head end.

Each of the CMTS 24 and the stream player 26 is adapted for use in a portable test apparatus and for connecting with only a single user device at a time. The stream player 26 in the portable test apparatus 10 may be designed for minimal form factor, whereas a standard stream player in a remote head end may be agnostic of form factor.

The CMTS 24 of the present embodiment is configured to operate using DOCSIS 1.1 and is fully compliant to the DOCSIS standard. In the present embodiment, the CMTS 24 has one downstream carrier and one upstream carrier. A CMTS in a remote head end may operate using, for example, DOCSIS 3.0 and may have, for example, four downstream carriers and one upstream carrier.

The head end 22 of the present embodiment comprises only one stream player 26, which may be repeatedly reconfigured to provide a succession of different channels, for example during a set top box test. By contrast, a remote head end that services a large number of homes may have multiple stream players, for example nine stream players, for the simultaneous provision of multiple channels.

The portable test apparatus 10 further comprises an FTP server 28 which is used for FTP file upload and download during cable modem/router testing, under the control of the controller 14.

The portable test apparatus 10 further comprises a system on a chip (SOC) 30 which is used for broadband speed testing, under the control of the controller 14. In the present embodiment, the SOC 30 is a processor having an ARM core, running an embedded Linux operating system. The SOC 30 has a GigE (gigabit Ethernet) port. In the present embodiment, the SOC has 512 MB of RAM (Random Access Memory) and 256 MB of flash memory. The kernel and software of the SOC 30 are modified for its use in the portable test apparatus 10.

In alternative embodiments, any appropriate processor may be used in place of the SOC 30.

The portable test apparatus 10 further comprises an attenuation unit 32 which comprises a programmable attenuator 34. In further embodiments, the attenuation unit 32 may comprise any suitable attenuator, for example any suitable reconfigurable attenuator. The attenuation unit 32, and in particular the programmable attenuator 34, is used to attenuate signals passing between the CMTS 24 or stream player 22 and the cable modem/router 40 or set top box 50.

When the cable modem/router 40 or set top box 50 is used in normal operation, the input signal level and characteristics which the cable modem/router 40 or set top box 50 should receive over the cable network are defined, for example by the cable network provider. For example, the cable network provider may specify allowable input signal levels for each frequency of operation. In the present embodiment, a cable network provider defines allowable input signal levels for each of at least two modulation schemes (for example 64QAM and 256QAM). Different cable network providers may define different allowable input signal levels and/or other cable characteristics such as Bit Error Rate (BER) and Modulation Error Rate (MER).

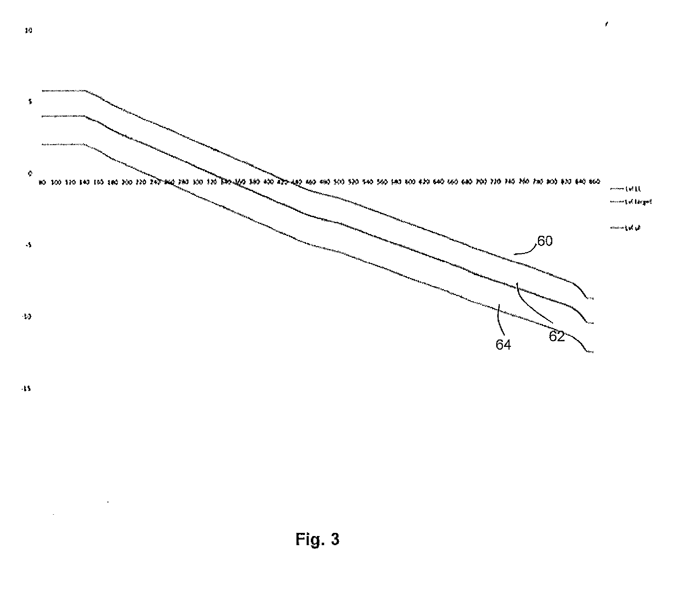

Allowable signal levels for each frequency of operation may be specified as a calibration curve. An example of a calibration curve for one cable network provider for a given modulation scheme is shown in Figure 3. The calibration curve is a plot of signal level in dBmV against frequency. The upper line 60 of the plot indicates the upper limit for the signal level that should be received by the cable modem/router 40 or set top box 50. The centre line 62 indicates a central value, and the lower line 64 indicates the lower limit for the signal level.

When used for testing, the portable test apparatus 10 delivers an input signal to the cable modem/router 40 or set top box 50 under test via the CMTS 24. To perform a meaningful test, the input signal to the cable modem/router 40 or set top box 50 under test may be representative of an input signal that would be received by the cable modem/router 40 or set top box 50 in normal use. Therefore, the input signal delivered by the portable test apparatus 10 may be required to conform to the appropriate calibration curve (e.g. a calibration curve that is representative of the input signal that would be received by the device under test in normal use). If the portable test apparatus 10 is used to test devices having different input requirements, for example cable modems/routers receiving signals having different modulation schemes, then portable test apparatus 10 may be required to provide input signals having different signal characteristics to match those received by each device in its normal operation.

When the portable test apparatus 10 is manufactured, it may not initially have signal levels within the limits specified by the required calibration curve or curves to which it is required to operate. Each portable test apparatus 10 manufactured may have different initial signal levels. A calibration process is carried out on each portable test apparatus 10 as part of the manufacturing process in which a set or a plurality of sets of attenuation values for that portable test apparatus 10 is determined. A different set or plurality of sets of attenuation values may be determined for each portable test apparatus 10. Each set of attenuation values may be described as an attenuation configuration, where an attenuation configuration describes attenuation as a function of frequency.

In the present embodiment, the portable test apparatus 10 is used for testing devices of one cable network provider and for two modulation schemes. Therefore, two sets of attenuation values (e.g. two attenuation configurations) are determined, to correspond to two calibration curves, one for each modulation scheme. In alternative embodiments, the portable test apparatus 10 is configured to test devices of more than one cable network provider, and therefore different attenuation values may be determined for the different providers, if the providers require different calibration curves (e.g. different limits on input signal level).

In further embodiments, alternative calibration curves may be used in order to stress test a product at its limit extremes (rather than being representative of conditions in normal use). In some cases, this may be considered out of scope for standard testing and may be used in, for example, development rather than standard test.

For each modulation scheme, an attenuation setting for the portable attenuator 34 is calculated for each of a plurality of frequencies across the frequency range of operation of the portable test apparatus 10. Some frequencies have higher signal levels and require more attenuation. In the present embodiment, attenuation values are calculated for each of a plurality of frequencies across a range of downstream frequencies (frequencies over which signals are sent from the portable test apparatus 10 to the device over test) of 85 MHz to 860 MHz. In other embodiments, a different frequency range may be used.

In the present embodiment, the attenuation setting is calculated based on the centre line of the relevant calibration curve. In practice, due to the nature of the noise floor relative to frequency in any instrument, there may be variance within the calibration profile.

During manufacture, the Bit Error Rate and/or Modulation Error Rate may also be tested for compliance with applicable specifications.

The attenuation value for each frequency (the attenuation configuration) is stored in a calibration file which is filled in automatically during the calibration process. Therefore in the present embodiment, two calibration files are stored (representing two attenuation configurations), one for each modulation scheme. In other embodiments, more than two calibration files may be stored. Each calibration file may be described as an attenuation configuration.

During the testing process, for the frequency in use, the programmable attenuator 34 applies an attenuation corresponding to the attenuation value in the calibration file. The portable test apparatus 10 simulates the characteristics of the cable to which the cable modem/router 40 or set top box 50 would normally be attached. The attenuation value is changed automatically when the frequency changes, such that the input signal level to the cable modem/router 40 or set top box 50 is always compliant with the calibration curve defined by the cable network provider (which may require different input signal levels for different frequencies).

In the present embodiment, the calibration files are created and stored during the calibration process that takes place during initial manufacturing. New calibration files may be created if the housing 12 of the portable test apparatus 10 is opened or removed, for example to fix a fault in the portable test apparatus 10. For example, if the housing 12 has been removed and subsequently replaced, a re-calibration may be performed, which may result in new calibration files, before the portable test apparatus 10 is returned to use in testing.

The programmable attenuator 34 may be at least partially implemented in software. In some embodiments it is possible that a programmable attenuator 34 may provide finer increments of attenuation than a hardware attenuator. Therefore the programmable attenuator 34 may provide greater accuracy in attenuation than a hardware attenuator or attenuators. Furthermore, if fixed hardware attenuation was used during the calibration process, it is possible that a test apparatus may only be able to be configured to meet a single attenuation curve and may not be able to apply multiple different sets of attenuation settings (different stored attenuation files) to meet different requirements, for example different operators or different modulation schemes. A programmable attenuator may also be smaller and lower-cost than an equivalent hardware attenuator.

In the present embodiment, the programmable attenuator 34 is calibrated during manufacture of the portable test apparatus 10, resulting in at least two calibration files. If the portable test apparatus 10 requires to be opened up during its life, for example for repair, the programmable attenuator 34 may be recalibrated.

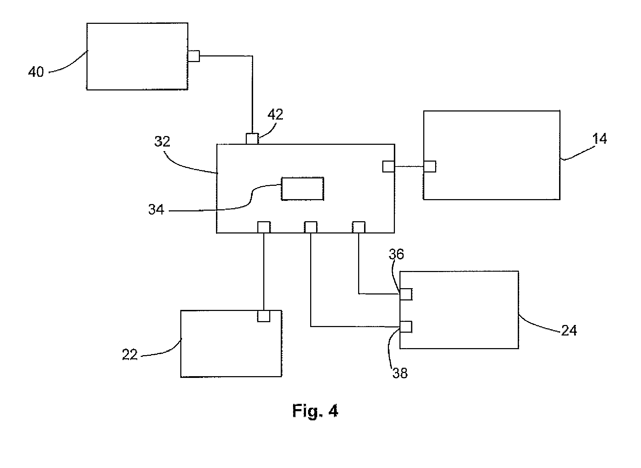

Figure 4 is a schematic illustration of connections between the attenuation unit 32 comprising the programmable attenuator 34, and other components of the portable test apparatus 10 and the device under test. The attenuation unit 32 is controlled by the controller 14. The attenuation unit 32 is also connected to the downstream port 36 and upstream port 38 of the CMTS 24. In Figure 4, the attenuation unit 32 is shown as being connected to cable modem/router 40 via external port 42. This is the configuration used in testing the cable modem/router 40. However, when testing a set top box 50, the cable modem/router 40 shown in Figure 4 is replaced with a set top box 50.

Returning to Figure 2, the portable test apparatus 10 further comprises a plurality of external ports 42 (including the external port 42 represented in Figure 4) and a wireless network interface 44. In some embodiments, the portable test apparatus 10 has a single external port 42 to which a Unit Under Test (UUT) harness assembly comprising a plurality of cables having different connectors (for example, SCART, USB, Ethernet) may be connected. An interconnect PCB 41 connects the external port or ports 42 to the rest of the system.

In the diagram of Figure 2, a handheld barcode scanner 46 is connectable to the portable test apparatus 10 by a cable 48 connected to a cable port 47. In the present embodiment, the barcode scanner 46 is not integrated into the portable test apparatus 10 and may be connected and disconnected from the portable test apparatus 10 as appropriate. However, in alternative embodiments, the barcode scanner 46 is integrated into the portable test apparatus 10. In further embodiments, the scanner may be any type of scanner that may receive information from a unit under test, for example from a label on a unit. In one embodiment, the scanner is an RFID scanner, which may be either integrated into or separate from the portable test apparatus 10. The barcode scanner 46 or alternative scanner may be connected to the portable test apparatus 10 by a cable 48, over a wireless connection, or by any other suitable method.

In the present embodiment, the portable test apparatus 10 is powered by mains power. In further embodiments, the portable test apparatus 10 is powered by battery power.

The portable test apparatus 10 further comprises a fan assembly (not shown) which delivers linear air flow across components of the portable test apparatus 10 to regulate the internal temperature of the portable test apparatus 10. In the present embodiment, the source of heat inside the unit is primarily CMTS thermals.

In the present embodiment, components of the portable test apparatus 10 are mounted on four PCBs (not shown): an attenuator PCB comprising the attenuation unit 32, a CMTS PCB comprising the CMTS 24, a stream player PCB comprising the stream player 26 and a controller PCB comprising the controller 14. The SOC 30 is a PCB module that connects to the controller PCB.

Shielding (not shown) is used to reduce the crosstalk between the PCBs. In the absence of adequate shielding, noise may be generated and components may experience interference. In the absence of adequate shielding, the portable test apparatus 10 may be unable to meet requirements, such as required signal to noise level or bit error rate.

In the present embodiment, some components are housed within shielding boxes. Careful choice of box size may be made to avoid amplifying certain frequencies. In the present embodiment, the attenuator PCB is fully enclosed and there are two IC (integrated circuit) covers on the attenuator PCB. The stream player PCB has a top cover on the PCB and a cover on an IC. The controller PCB has a top cover. The CMTS PCB does not have a top cover but there is a plate between the controller 14 and the CMTS 24. The CMTS 24 has an enclosed upconverter. In the present embodiment, none of the components are shut down when tests are being performed that do not involve that component.

In some embodiments, the portable test apparatus also includes various additional components (not shown) that are configured for set top box testing, for example a combiner, a video capture card and a hardware interface including a video decoder/encoder and a multiplexer.

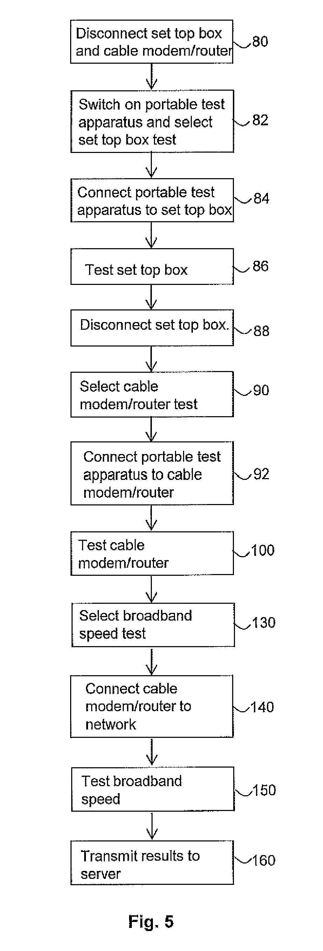

The portable test apparatus of Figure 2 is configured to perform a test process having a series of stages as illustrated in overview in the flow chart of Figure 5. The flow chart of Figure 5 represents a process of testing in a customer's home a set top box 50, a cable modem/router 40, and the speed of the customer's broadband connection when connected through the cable modem/router 40. It will be understood that although the flow chart of Figure 5 describes the testing of the set top box 50, the cable modem/router 40, and the broadband speed in a particular order, the portable test apparatus 10 may be used to perform these tests in any order, and may be used to perform the tests either independently or in combination.

The process of Figure 5 is described as occurring in situ in the home of a customer, who has a set top box 50 and a cable modem/router 40 connected to a broadband connection (for example, a cable network). It will be understood that testing with the portable test apparatus 10 may alternatively be performed in a customer's place of business, in a dedicated test facility, or in any suitable location. Furthermore, the customer may have multiple set top boxes 50 and/or cable modems/routers 40, in which case appropriate tests may be repeated for each unit. The customer may have a set top box 50 without a cable modem/router 40 or a cable modem/router 40 without a set top box 50, in which case some stages in the process of Figure 5 may be omitted as appropriate.

At stage 80, the test operator (for example, a field technician) switches off the set top box 50 and disconnects it from cable, telephone line or other input connections from which it receives content. The test operator also disconnects any outputs from the set top box 50. For example, the set top box 50 may be disconnected from a TV, VCR or other user electronic device that receives content from the set top box 50. The test operator also switches off the cable modem/router 40 and disconnects it from cable, telephone line or other input connections. Output connections from the cable modem/router 40 under test are also disconnected. For example the cable modem/router 40 may be disconnected from a PC or other user electronic equipment.

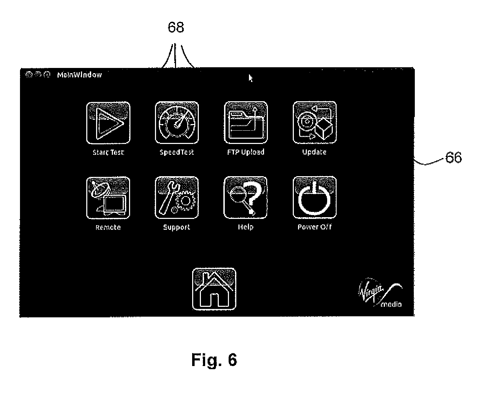

At stage 82 the operator switches on the portable test apparatus 10. The controller 14 causes the display screen 20 of the portable test apparatus 10 to display a home page screen 66 comprising a plurality of icons 68. An example of a home page screen 66 is illustrated in Figure 6. The test operator selects an icon 68 from the home page screen 66 to start a set top box test. For example, on the home page screen 66 of Figure 6, the operator selects the 'Start Test' icon 68. In the present embodiment, the operator selects the icon 68 by touching the display screen 20. In further embodiments, the operator may select the icon 68 using an alternative input device, for example a keyboard or a mouse, or the operator may type in a text command, or use any other appropriate method of selection.

The controller 14 receives the operator's test selection and displays one or more selection screens on which the operator may select the particular set top box 50 to be tested. For example, the operator may select the manufacturer and model of a set top box 50 to be tested.

At stage 84, the controller 14 causes an instruction screen to be displayed on display screen 20 which instructs the operator on the cable connections required for the set top box test. Following the instructions on the instruction screen, the operator connects the set top box 50 to the portable test apparatus 10 via appropriate cables (for example, Scart or RF cables, or appropriate connectors of UUT harness assembly 45) connected to external port or ports 42 and appropriate input and/or output ports of the set top box 50.

At stage 86, the controller 14 causes the portable test apparatus 10 to perform a series of set top box tests, for example streaming audio/visual signals to the set top box 50 and analysing the received signal, and verifying the operation of the set top box controls. The controller 14 stores the test results in memory 16. The process of set top box testing is not described here in detail, but may be performed in accordance with, for example, the methods disclosed in European Patent Application EP2587822. When the CMTS 24 is providing an input signal to the set top box 50, the programmable attenuator 34 in the attenuation unit 32 attenuates the signal from the CMTS 24 in dependence on the frequency in use and the appropriate calibration curve. When the frequency in use changes, the attenuation of the programmable attenuator may change accordingly. The programmable attenuator 24 provides attenuation such that the signal level remains within required limits determined by the calibration curve required by the cable network provider.

In alternative embodiments, the controller 14 may change the signal level provided by the CMTS by changing the level of the signal source, instead of by changing the attenuation provided by the attenuator 34.

At stage 88, when set top box testing is complete, the controller 14 displays a test completion screen on the display screen 20 informing the operator that the test is complete, and instructing the operator to disconnect the cables that connect the portable test apparatus 10 to the set top box 50. The test completion screen requests the operator to touch an icon 68 when the cables have been disconnected. When the operator has touched the icon 68, the controller 14 once again displays the home page screen 66 on display screen 20.

At stage 90, the operator selects a cable modem/router test, for example by selecting an icon 68 on home page screen 66 and following on-screen instructions to select a make and model of the cable modem/router 40 to be tested.

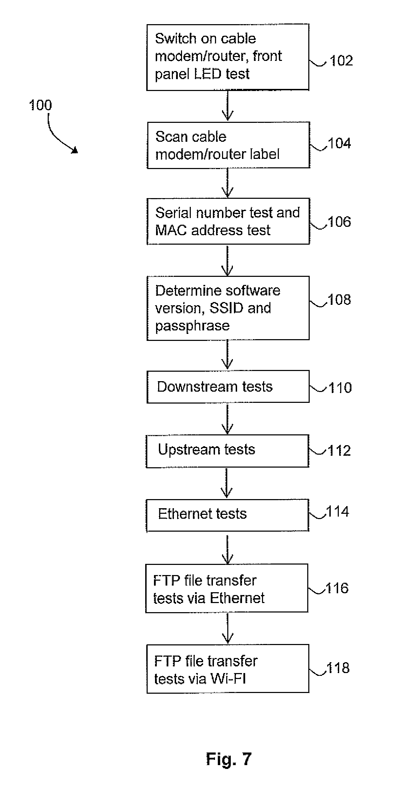

At stage 92, the controller 14 displays instructions on display screen 20 that instruct the operator to connect the portable test apparatus 10 to the cable modem/router 40 under test using appropriate cables (for example, RF or Ethernet cables, or appropriate connectors of UUT harness assembly). In the present embodiment, the operator also changes the cable connections during the tests described below with reference to Figure 7. However, in alternative embodiments, all required cables are connected at stage 92. For example, in one embodiment, four Ethernet cables are used to connect the portable test apparatus 10 to all four LAN ports of the cable modem/router 40.

At stage 100, the controller 14 initiates and controls a sequence of cable modem/router tests which are illustrated in overview in the flow chart of Figure 7. In the present embodiment, instructions are provided to the operator by the controller 14 via the display screen 20 at appropriate points in the test sequence of stage 100 and Figure 7, and the operator takes appropriate action, for example disconnecting and reconnecting cables. In alternative embodiments, the cable modem/router test sequence is fully automated.

At stage 102 of Figure 7, the controller 14 causes the display screen 20 to display instructions to the operator to power on the cable modem/router 40. The operator responds to the instructions by switching on the cable modem/router 40.

In the present embodiment, the cable modem/router 40 has a front panel comprising a plurality of LEDs. In the present embodiment, if the cable modem/router 40 is operating correctly, all the LEDs will become illuminated when the cable modem/router 40 is switched on.

The display screen 20 displays instructions to the operator to conduct an LED front panel test by observing whether all the LEDs on the front panels are illuminated when the cable modem/router is switched on. In the present embodiment, the operator provides a response by touching one of two icons, 'Pass' or 'Fail'. If all the LEDs turn on, the operator indicates that the LED front panel test has been passed. If one or more of the LEDs fail to turn on, the operator indicates that the LED front panel test has been failed. In the present embodiment, if the operator touches the 'Fail' icon, a further screen is provided for the operator to indicate which of the LEDs failed to illuminate. In alternative embodiments, any suitable input method may be used. In some embodiments, only the failure of the test may be recorded, and not the detail of which LED or LEDs failed.

The controller 14 receives the operator's input and stores the result in memory 16. In one embodiment, the controller represents the pass or fail status by an integer value, for example 1=pass, 2=fail. Any of the additional tests described below may also represent pass or fail status by an integer value. Any of the tests may also record additional data relating to the test along with the pass or fail indication.

In alternative embodiments, the LED front panel test is performed after the cable modem/router 40 has been switched on and is not performed during the switching on of the cable modem/router 40. In such embodiments, a MIB command may be used to turn on the LEDs. The operator then observes whether all the LEDs have been turned on, as described above.

At stage 104, the controller 14 displays a screen on display screen 20 which instructs the operator to use the barcode scanner 46 to scan a label on the cable modem/router 40 which includes a barcode representing the MAC address and serial number of the cable modem/router 40. When the barcode is scanned, the scanner 46 passes the MAC address and serial number to the controller 14. The controller 14 receives the MAC address and serial number from the barcode scanner 46 and stores them in memory 16. In alternative embodiments, any suitable information may be stored on the label of the cable modem/router 40 and/or acquired by the barcode scanner 46.

In alternative embodiments, the scanner and label may be of a different type (for example RFID) or the operator may type in a MAC address and serial number that are represented on the label in a human-readable format. For example, the operator may type in a MAC address and serial number using a virtual keyboard on the display screen 20.

The controller 14 then performs a series of automated home page tests comprising a serial number test, a MAC address test, a software version test, an SSID test and a passphrase test. The tests are initialised, controlled and monitored by the controller 14. The controller 14 communicates instructions to the CMTS which produces stimuli in the DOCSIS protocol that are communicated to the modem/router 70.

At stage 106, the controller 14 issues a MIB command to the cable modem/router 40 to determine the serial number that is stored internally by the cable modem/router 40. The controller 14 stores in memory 16 the serial number that was stored internally and retrieved using the MIB command. The controller 14 then compares the serial number that is stored internally to the serial number that was retrieved by scanning the barcode on the label. If the serial numbers match, the controller 14 records that the serial number test has been passed. If the serial numbers do not match, the controller 14 records that the serial number test has been failed. In the present embodiment, no further testing is performed on the cable modem/router 40 if the serial number test is failed.

The controller 14 issues a MIB command to the cable modem/router 40 to determine the MAC address that is stored internally by the cable modem/router 40, and stores the MAC address that is retrieved using the MIB command to memory 16. The controller compares the MAC address that is stored internally to the MAC address that was retrieved by scanning the barcode on the label. If the MAC addresses match, the controller records that the MAC address test has been passed. If the MAC addresses do not match, the controller 14 records that the MAC address test has been failed.

At stage 108, the controller 14 sends MIB commands to the cable modem/router 40 under test to determine the software version installed on the cable modem/router 40 and to determine the SSID (Service Set Identifier) and passphrase that are set on the cable modem/router 40. The controller 14 stores the results in memory 16.

The SSID is the name given to the router and the passphrase is the user's password. In some cases, the user may not have changed the SSID and passphrase from the default values that were supplied with the cable modem/router 40. However, in other cases, the user will have changed the SSID and passphrase to their own selection. Rather than changing the SSID and passphrase to factory default (and therefore losing the customer's settings) the controller 14 reads the SSID and passphrase and records them to memory 16. The SSID and passphrase may then be used in subsequent testing, for example Wi-Fi testing. Since the customer's settings are retained, there is no need for the customer or operator to reconfigure the unit with the customer's preferred settings when testing is complete, for example if no fault is found in testing and the cable modem/router 40 is retained by the customer after testing.

At stage 110, the controller 14 initiates downstream testing, the downstream testing comprising a lock status test, a downstream frequency test, a downstream modulation test, a downstream signal level test and a downstream SNR (signal to noise ratio) test.

Downstream testing is testing of the transmission of data from the head end 22 in the portable test apparatus 10 to the cable modem/router 40. The data is transmitted using a connecting cable.

The CMTS 24 issues an IP address to the cable modem/router 40 and attempts to establish frequency lock. If frequency lock is established between the CMTS 24 and the cable modem/router 40, the lock status test is passed. The controller 14 records the result of the lock status test in memory 16. The controller 14 establishes that frequency lock has been obtained at the correct downstream frequency. In the present embodiment, the CMTS 24 attempts to establish frequency lock at a downstream test frequency of 331 MHz. In other embodiments, a different downstream test frequency may be used. If frequency lock is achieved at the correct frequency, the downstream frequency test is passed. The controller 14 records the result of the downstream frequency test in memory 16.

The controller 14 also tests the modulation scheme used by the cable modem/router 40. In the present embodiment, the controller 14 tests the modulation scheme to ascertain that is it one of the two downstream modulation schemes for which the portable test apparatus 10 is configured. In the present embodiment, the portable test apparatus 10 is configured to test devices operating using 64QAM or 256QAM.

If the modulation scheme is either 64QAM or 256QAM, the controller 14 records that the modulation scheme test has been passed, and records the modulation scheme in use (64QAM or 256QAM) in memory 16.

In alternative embodiments, the controller 14 uses the make and model of the cable modem/router 40 that were selected by the operator at stage 90. The controller 14, memory 16 or other component stores information about the modulation scheme that should be used by each make and model of cable modem/router 40 that the portable test apparatus 10 is configured to test. The controller 14 tests whether the modulation scheme is the modulation scheme that is expected for the cable modem/router 40 under test. If the modulation scheme is the expected modulation scheme, the controller 14 records that the modulation scheme test is passed.

The controller 14 sends a downstream signal to the cable modem/router 40. The signal level of the downstream signal is controlled according to the appropriate calibration file. The programmable attenuator 34 looks up the correct calibration file (for example, the calibration file for the required modulation scheme and cable network provider), determines the attenuation value required for the test frequency and applies that attenuation value to the downstream signal.

The controller 14 sends a MIB command to the cable modem/router 40 to request the downstream signal level received by the cable modem/router 40, and the cable modem/router 40 returns a value for the downstream signal level in response. The downstream signal level received by the cable modem/router 40 should be between the upper limit 60 and lower limit 64 at the frequency of operation on the appropriate calibration curve (for example, the calibration curve of Figure 3). Each calibration curve is stored as a table in memory 16. If the downstream signal level is between the upper and lower limits at the frequency that is being used, the cable modem/router passes the downstream signal level test. If the downstream level is above the upper limit or below the lower limit, the cable modem/router 40 fails the downstream signal level test. In the present embodiment, the calibration curve for one modulation scheme (for example 64QAM) may differ from the calibration curve for another modulation scheme (for example, 256QAM). Therefore, at a given frequency such as the download test frequency, the allowable upper limit and/or lower limit for the signal level may be different for different modulation schemes. Therefore whether the downstream signal level test is passed or failed by a given signal level may be dependent on which modulation scheme is in use, each modulation scheme having different limits. In further embodiments, different calibration curves may apply to equipment from different cable network providers.

The controller 14 sends a MIB command to the cable modem/router 40 to obtain the signal to noise ratio (SNR) of the downstream signal received by the cable modem/router 40 and the cable modem/router 40 returns a value for the SNR in response. In the present embodiment, the controller 14 compares the SNR of the downstream signal to a threshold value. In the present embodiment, the threshold value is 32 dB. If the downstream SNR is better than 32 dB, the controller 14 records that the cable modem/router 40 has passed the downstream SNR test. In alternative embodiments, a different threshold value is used. In some embodiment, the acceptable SNR level is dependent on the modulation scheme that is being used. The controller 14 retrieves the modulation scheme and the associated threshold value from memory 16. In some embodiments, the SNR threshold is different for different cable network operators.

Although the downstream tests of stage 110 have been described in a particular order, the downstream tests may be performed in any order. Two or more tests may be performed simultaneously. Individual tests may be combined. For example, in one embodiment a downstream lock test is defined that comprises determining that a lock has been established, determining the frequency at which the lock has been established, and determining the modulation scheme. The cable modem/router 40 passes the downstream lock test if a lock is established at the correct frequency with an acceptable modulation scheme.

At stage 112, the controller 14 initiates upstream testing, the upstream testing comprising a lock status test, an upstream frequency test and a transmit power test. Upstream testing is testing of the transmission of data from the cable modem/router 40 to the head end 22 in the portable test apparatus 10. The data is transmitted using a connecting cable.

The controller 14 instructs the CMTS 24 to attempt to establish frequency lock with the cable modem/router 40 at an upstream frequency. In the present embodiment, the upstream frequency is within a range of upstream frequencies between 50 MHz and 85 MHz. If frequency lock is established between the CMTS 24 and the cable modem/router 40, the lock status test is passed. The controller 14 records the result of the lock status test in memory 16. The controller 14 then assesses whether the frequency lock has been established at the correct upstream frequency. If frequency lock is achieved at the correct frequency, the upstream frequency test is passed. The controller 14 records the result of the upstream frequency test in memory 16.

In normal operation, the cable modem/router 40 may operate at a transmit power that is considerably lower than its maximum possible transmit power level. For example, in the present embodiment, the cable modem/router 40 normally operates at a transmit power of around 30 dBmV. However, in the present embodiment, the cable modem/router 40 is capable of producing a transmit power of up to 60 dBmV.

In the transmit power test, the controller 14 instructs the attenuation unit 32 to increase the attenuation on the signal from the CMTS 24 such that the cable modem/router 40 increases its transmit power (increases amplification) in response. The controller 14 sends a MIB command to the cable modem/router 40 requesting the transmit power and the cable modem/router 40 returns a value for the transmit power. The controller 14 then stores the value for the transmit power in memory 16, and compares the received transmit power with a threshold value. In the present embodiment, the threshold value is 50 dBmV. If the transmit power is equal to or greater than the threshold value, the transmit power test is passed. If the transmit power is less than the threshold value, the transmit power test is failed. The controller 14 records the pass or fail in the memory 16.

At stage 114, the controller 14 initiates a set of Ethernet tests, one Ethernet test for each LAN port (Ethernet port) on the cable modem/router 40. In the present embodiment, the cable modem/router 40 has four LAN ports.

In the present embodiment, the controller 14 displays an instruction screen on display screen 20 which instructs the operator to disconnect the test cable that was used for the downstream and upstream tests (RF cable connecting the head end 22 to the cable input of the cable modem/router 40) and to connect an Ethernet cable 52 from a LAN port 42 on the portable test apparatus to a first LAN port on the cable modem/router 40. The controller 14 then performs a first Ethernet test by performing a ping test on the first LAN port. The controller 14 records the result of the first Ethernet test in memory 16. If the ping test is successful (the controller receives a correct reply from the cable modem/router 40), the first Ethernet test is passed. If the ping test is unsuccessful (for example, if an error message is received in response to the ping test), the first Ethernet test is failed. In some embodiments, the mean round-trip time obtained for the ping test and/or other ping test data is recorded in memory 16.

The controller 14 then displays an instruction screen on display screen 20 that instructs the test operator to disconnect the Ethernet cable 52 from the first LAN port and connect it to the second LAN port. A second Ethernet test is performed by performing a ping test on the second LAN port, and the controller 14 records whether the second Ethernet test is passed or failed. The process of disconnection from the previous port, reconnection to the next port, and ping test is repeated for the third and fourth LAN port, with the results recorded by the controller 14 and stored in memory 16.

In an alternative embodiments, the operator is instructed to connect four Ethernet cables from the portable test apparatus to the four LAN ports and the controller 14 tests each Ethernet port in turn without requiring any action from the operator between Ethernet tests. In further embodiments, the cable modem/router 40 may have more or fewer than four LAN ports, or may be a cable modem only (rather than a modem and router), having a single LAN port.

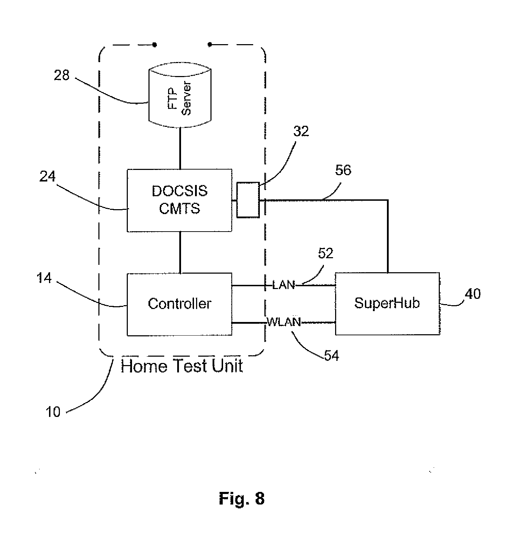

At stage 116, the controller 14 performs FTP file transfer tests (download and upload) via Ethernet. Figure 8 is a schematic diagram of the test configuration for the FTP file transfer tests.

In the present embodiment, for the FTP file transfer tests via Ethernet, the test operator leaves the Ethernet cable 52 in the position that it was in for the fourth Ethernet test, connecting the fourth LAN port of the cable modem/router 40 to the portable test apparatus 10. In alternative embodiments, the test operator moves the Ethernet cable connection to one of the other LAN ports, for example the first LAN port. In embodiments with multiple cables, the controller 14 may determine on which of the ports to perform the FTP file transfer tests. In some embodiments, the controller 14 may perform the FTP file transfer tests on each of the LAN ports in turn. In the present embodiment, the FTP file transfer tests are only performed on one LAN port.

In the present embodiment, the controller 14 instructs the FTP server 28 to download, via the CMTS 24, a first test file to the cable modem/router 40. The attenuation unit 32 attenuates the CMTS signal by applying the appropriate attenuation value from the calibration file to the programmable attenuator, so that the input signal received by the cable modem/router is within allowable limits according to the calibration curve at the relevant frequency. Different calibration curves may be used for different modulation schemes and/or cable network providers.

The first test file is a standard file which is 5 MB in size. If the file is not downloaded correctly, FTP will give an error. If an FTP error is received, the controller 14 records that the FTP Ethernet download test is failed. in some embodiments, the controller records the error message in memory 16. If the FTP file transfer is successful, FTP returns a success message, and the controller 14 records that the FTP Ethernet download test has been passed. In the present embodiment, the controller 14 also records the download speed, storing the results in memory 16. In alternative embodiments, the controller 14 may record further information about the FTP transfer.

The controller 14 then instructs the FTP server to upload a second test file from the cable modem/router 40, via the CMTS 24. In the present embodiment, the second test file is a standard file of 1 MB in size. If the file does not upload successfully over FTP, an error message is received by the controller 14 and the controller 14 records that the FTP Ethernet upload test has been failed. If the file uploads successfully over FTP, FTP returns a success message, and the controller 14 records that the FTP Ethernet upload test has been passed. In the present embodiment, the controller also records the upload speed, storing the results in memory 16. In alternative embodiments, the controller 14 may record further information about the FTP transfer.

At stage 118, the controller 14 presents instructions on the display screen to instruct the operator to disconnect the Ethernet cable. The controller 14 then performs FTP file transfer tests using a wireless connection 54 between the portable test apparatus 10 and the cable modem/router 40. An FTP wireless download test is performed in which the FTP server 28 attempts to download the standard 5 MB download file (the first test file) to the modem/router 40 using a wireless connection. If the file is downloaded successfully, the controller 14 records the time taken to download and records that the cable modem/router 40 has passed the FTP wireless download test. If the file is not downloaded successfully, an error message is returned by the FTP server 28 and the controller 14 records that the FTP wireless download test has been failed. In some embodiments, the controller 14 records the FTP download error message.

An FTP wireless upload test is also performed in which the FTP server 28 attempts to upload the standard 1 MB upload file from the cable modem/router 40. If the file is uploaded successfully, the controller 14 records that the FTP wireless upload test has been passed and records the time taken to upload the file, the time having been returned by the FTP server 28. If the file is not uploaded successfully, an error message is returned by the FTP server 28. The controller 14 records that the FTP wireless upload test has been failed. In some embodiments, the controller 14 records the error message that was received from the FTP server 28.

In the present embodiment, the FTP wireless upload test completes the cable modem/router tests of stage 100 (comprising stages 102 to 118). The controller 14 instructs the display screen 20 to display a test completion screen.

In the above tests of stage 100, the cable modem/router 40 was tested when disconnected from the cable network input that it receives in normal operation. The cable modem/router 40 received commands via the CMTS 24 that is built into the head end 22 of the portable test apparatus 10.

As test input signals are provided by the head end 22, the testing of the cable modem/router 40 can be performed independently of the performance of the network or other delivery mechanism for delivering content to a user in normal use. In many cases, problems experienced by a user may be due to network or other content delivery mechanism performance, but may be erroneously attributed to the cable modem/router 40. The portable test apparatus 10 can test cable modem/router performance in isolation from such factors.

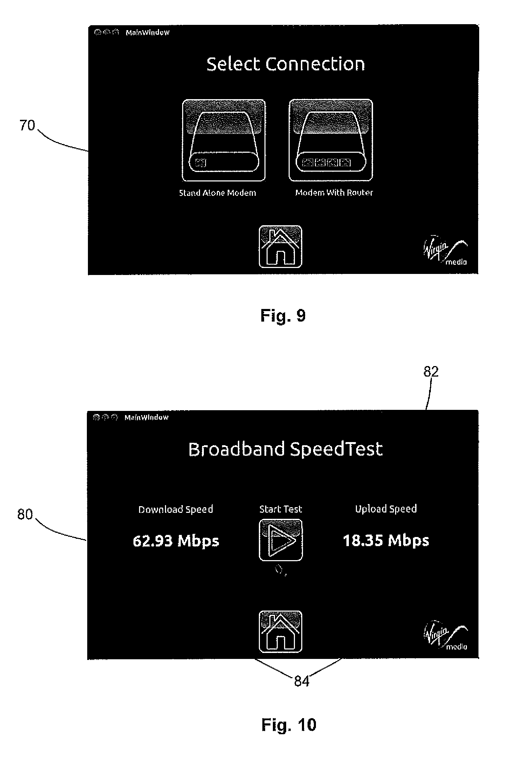

Returning to the flow chart of Figure 5, the controller 14 displays the home page screen 66 once more. At stage 130, the operator selects the broadband speed test by touching the appropriate icon 68 on home page screen 66. The controller 14 then causes the display screen 20 to display a modem selection screen 70, which asks the operator to choose whether a standalone modem or a modem with router is being tested. An example of a modem selection screen 70 is illustrated in Figure 9. In the present embodiment, the test operator selects the right icon, 'Modem with Router'. In further embodiments, the test operator is not required to select whether a standalone modem or modem with router is being tested and/or no modem selection screen 70 is displayed.

At stage 140, in the present embodiment, the controller 14 displays on the display screen 20 a user interface that requests the test operator to connect the cable modem/router 40 to the cable network connection from which it receives content in normal operation. The user interface also requests the test operator to connect a LAN port of the cable modem/router 40 to the portable test apparatus 10 using an Ethernet cable. In some embodiments, the user interface indicates which LAN port of the cable modem/router 40 should be connected to the portable test apparatus 10.

In alternative embodiments, the controller 14 or other component of the portable test apparatus 10 automatically detects whether a standalone modem or modem with router is being tested, for example by sending a MIB command after the modem/router is connected.

The controller 14 displays on the display screen 20 a broadband test page 80. An example of a broadband test page 80 is illustrated in Figure 10. The broadband test page 80 comprises a start button 82 and speed indicators 84. In the present embodiment, values for the speed indicators are displayed when a broadband speed test is completed. In alternative embodiments, values for the speed indicators are displayed and updated while the broadband speed test is ongoing.

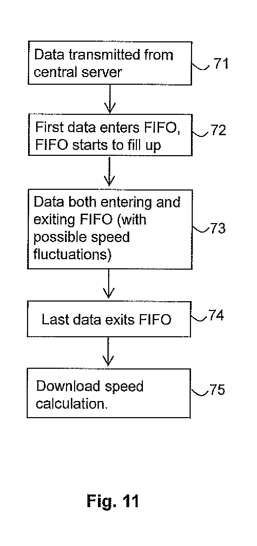

At stage 150, the test operator selects the start button 82 for the broadband speed test, and the controller 14 instructs the SOC 30 (system on a chip) to perform a broadband download speed test as described below with reference to Figure 11. In alternative embodiments, the SOC 30 may be replaced with any suitable processor.

The method of broadband speed testing described below is tailored to the hardware of the portable test apparatus and may have lower memory requirements than a Flash application. The method of broadband speed testing is designed for use on a system on a chip, which has limited processing and memory capacity. By designing a broadband speed test method for use on a system on a chip (SOC 30), the broadband speed test may be integrated into one apparatus with the set top box testing and cable modem/router testing facilities, providing increased functionality in a practical device that can be used in the user's home.

In the present embodiment, the SOC 30 connects to a network server via the cable modem/router 40 and cable network (the cable modem/router having been connected to the cable network as it would be connected in normal use by the customer). The SOC 30 therefore experiences a broadband connection that is similar to the broadband connection that would be experienced by a device used by the customer in the home, for example, the customer's PC. The network server to which the SOC 30 connects is remote from the location in which the test is being performed. In the present embodiment, the network server is a server that is dedicated to broadband speed testing.

The SOC 30 downloads a broadband speed test file from the remote network server using a program that records statistics on the broadband speed test file download.

In the present embodiment, the SOC 30 uses a cross-compiled version of GNU Wget (http://www.gnu.org/software/wget) to download a broadband speed test file from the remote network server. Wget is a program for downloading files which provides real time statistics from the TCP/IP stack on download volume versus time. In alternative embodiments, any suitable program may be used.

The broadband speed test file is a large file of known size. In the present embodiment, the SOC 30 downloads one test file, which may be called a broadband speed test file, from one remote server. In alternative embodiments, the SOC 30 downloads more than one broadband speed test file from the remote server. In further embodiments, the SOC 30 downloads a broadband speed test file from each of a plurality of remote servers, or downloads different broadband speed test files from different remote servers.

The SOC 30 receives downloaded test file data from the downloaded broadband speed test file. On arriving at the SOC 30, the downloaded test file data enters a buffer which is part of the SOC 30. In the present embodiment, the SOC 30 comprises a FIFO (first-in first-out buffer), and may additionally comprise other buffers. In alternative embodiments, the processor (which may be a SOC) may comprise any type and number of hardware or software buffers. The data flow described below with reference to a FIFO may also be applied to other buffers.

Figure 11 represents a flow of data through the FIFO of the present embodiment.

At stage 71, data is transmitted from the central server. At stage 72, the first data enters the FIFO and the FIFO starts to fill up with data. When a file starts to download, it is expected that the download speed for the start of the transfer may be slower than the download speed for the rest of the transfer, because hardware and software buffers may take time to fill up at the start of the transfer. In general, the data throughput from TCP/IP may fluctuate throughout the life of a download.

After the FIFO is first filled, the process enters stage 73, where data is both entering and exiting the FIFO. The data may pass through the FIFO in bursts, alternately slowing down and speeding up. The speed may peak when the data is coming out and be reduced when the FIFO is filling up. Such behaviour of the data output by the FIFO does not reflect changes in the broadband speed of the broadband connection, but rather the characteristics of the FIFO itself. Therefore, it may be desirable to remove speed variations due to the FIFO when determining the broadband speed for the broadband connection.

At stage 74, the last data exits the FIFO. The final stages of the data throughput may be slower than the average, mean or median speed.

In the present embodiment, once the transferred data is received by Wget, the SOC 30 does not write the downloaded test file data to memory, but instead discards the downloaded data as it arrives. In the present embodiment, the SOC 30 discards the downloaded data by writing the downloaded test file data to null. Writing to null in this case comprises redirecting the content of the downloaded test file to a location (a null file or null drive) that does not write the content to memory. Therefore, after the downloaded test file data (e.g. the file content) exits the buffer it is not written to or stored in any component of the portable test apparatus 10.

In further embodiments, discarding the downloaded test file data may comprise writing the file to a temporary buffer, cache or other temporary memory location. The downloaded test file data may be temporarily stored and then cleared, overwritten or deleted.

In other embodiments, part of the downloaded test file data is discarded (for example, by writing to null or by writing to a temporary file and clearing, overwriting or deleting the data) and a part is written to memory.

In the present embodiment, data is discarded as it exits the FIFO and therefore at least part of the downloaded test file data is discarded before completion of the download of the test file.

Writing the downloaded test file to memory may delay or limit the speed of the download. Writing the downloaded test file to a location (such as a null drive) that discards the data from the downloaded test file allows the use of a small processor such as a system on a chip that may have limited processing or memory capacity. Writing the downloaded test file to a location that discards the data may give a truer reflection of download speed than some methods in which the downloaded test file is written to memory.

As the downloaded broadband speed test file is simply a test file and does not itself contain data that is relevant to the broadband speed test process, it is appropriate to discard the data as it arrives. It is, however, important to record that the data arrived and in particular to record how fast it arrived. The process of recording and processing statistics regarding the speed of arrival of the data is described further below.

While stage 71 to 75 are happening, the SOC 30 stores in memory the set of download statistics that are provided by Wget during the download. Wget obtains data from the packet headers of received TCP/IP packets regarding the amount of data in each packet and records that data with time. In the present embodiment, for each of a set of time intervals covering the entire download time, the SOC 30 stores a corresponding measured download volume (received from Wget) which represents the volume of data downloaded in that time interval. The download volume values for each of the time intervals are posted to an array.

In the present embodiment, the series of time intervals covers the entire time period from the start of the download of a broadband speed test file to the completion of the download of the broadband speed test file. In alternative embodiments, the series of time intervals may cover only a portion of the time period during which the broadband speed test file is downloaded.

For data to be received by Wget (and recorded as a part of the download statistics) it must pass through the FIFO and therefore experiences speed fluctuations as described above. Therefore it is necessary to process the download statistics to take into account the behaviour of the FIFO. (In further embodiments, the download statistics may be processed to take into account the behaviour of any buffer.) If the download volume for any single time interval were used to calculate a broadband speed for the broadband connection, it is likely that the speed would not be representative of an overall speed that the customer would experience when using the broadband connection for extended periods of time. In the present embodiment, data logged by Wget is post-processed to achieve a broadband speed value that may be more representative of the speed of the broadband connection that is experienced by the user. Under some conditions, the post-processing may substantially remove the effect of speed fluctuations during the test download.

The statistics about the download that are recorded during the download (in the present embodiment, the statistics that are provided by Wget) are stored in order to determine the broadband speed by processing the statistics. The download statistics are stored in memory that is fast to write to and read from. In embodiments, the download statistics are stored in volatile memory. The volatile memory may be random-access memory (RAM). In the present embodiment, the SOC 30 creates a RAM drive (a block of RAM that is treated as a disk drive) to store the statistical data logged by Wget.

Writing to volatile memory such as RAM is typically faster than writing to other forms of memory such as flash memory or a hard disk. Therefore volatile memory is used so that writing the statistics to memory is a fast process and does not delay the download or limit the download speed. In contrast, writing to flash memory may be considerably slower than writing to volatile memory, for example to a RAM drive, and may limit the download speed.

Furthermore, the performance of flash memory may degrade with time. Flash memory may be limited in the number of write/erase cycles that may be performed on the flash memory. For example, some flash memory may have a lifetime of 10 000 write/erase cycles. The time required to write to flash memory may increase with the number of times that the flash memory is rewritten. Volatile memory may be able to be reused far more times than flash memory. Volatile memory may experience less performance degradation over time than flash memory.

By using Wget, which records download statistics during the file download, the download statistics may be accessed in real time, i.e. during the file download and without waiting until the end of the file download.

The array of download volumes corresponding to respective time intervals is sorted into an ordered list. In the present embodiment, the time intervals are of equal time, and the data values are sorted into ascending order of download volume. The resulting ordered list is then filtered using an algorithm to obtain a representative broadband speed. In some embodiments, filtering the ordered list comprises processing the ordered list. In some embodiments, filtering the ordered list comprises discarding some of the data in the ordered list.

Although in the present embodiment, a single broadband speed test file is downloaded, in other embodiments, multiple broadband speed test files are downloaded from one or more remote servers. In some such embodiments, download statistics from all the downloaded broadband speed test files may be combined into a single ordered list, or into any other suitable combined file or other data representation. Broadband speeds determined for the different files may be combined, for example to obtain an average, median or mode download speed or some other measure of the value or variation of download speeds, or to identify outlying values of download speed for particular files or servers.

In the present embodiment, the algorithm takes the median value of the download volume in the ordered list and divides the download volume by the length of the time interval to obtain a representative broadband speed. Taking the median value may limit the effect of outlier values, for example very slow download values (low download volumes) in particular time intervals. Taking the median value may limit the effect of errors.

In further embodiments, the algorithm uses the mode value of the download volume in the ordered list. Using the mode value may be appropriate where a high number of time intervals have been used, and therefore a substantial list of download volumes is available.

In alternative embodiments, the algorithm applies a smoothing filter such as the Savitsky-Golay filter to the download statistics to smooth out speed fluctuations and obtain representative download speeds. Applying a smoothing filter may be used to increase the signal-to-noise ratio of the downloaded data. The Savitsky-Golay filter is a filter that applied a polynomial regression to a time series (such as the series of download volumes for successive time increments). The Savitsky-Golay filter may preserve features of the data such as local minima and maxima. The use of a Savitsky-Golay filter may provide a real-time monitoring capability. The parameters of the Savitsky-Golay filter may be tailored to the hardware. For example the parameters may depend on the size of the buffer.

In other embodiments, an individual download speed for each time interval is obtained by dividing the download volume for that time interval by the length of the time interval. In some embodiments, a download speed for each time interval is obtained from the program that records statistics on the download. An ordered list is then created by sorting the individual download speeds, for example into order of ascending speeds. An algorithm is then applied, which may be an algorithm similar to those described above for processing download volumes.. For example a mode or median speed is taken, or a smoothing filter is applied to speed values.
In the present embodiment, all of the data in the ordered list is used in the calculation of the representative broadband speed that is returned by the broadband test. All potentially valid data may thus be retained.

In further embodiments, the first part of the download statistics (for example, the statistics collected as the FIFO is filling up at stage 72) may be discarded and/or omitted from the calculation of broadband download speed. Alternatively or additionally, the last part of the download statistics (for example, the statistics collected as the FIFO is emptying at stage 74) may be discarded and/or omitted from the calculation of broadband download speed.

The controller 14 then instructs the SOC 30 to perform a broadband upload speed test. The SOC 30 uploads one or more test files to the remote network server. The SOC 30 uses Wget to record upload statistics, where in the present embodiment the upload statistics comprise a plurality of measurements of upload volume, each for a respective time interval. The SOC 30 stores the statistics obtained from Wget on upload volume versus time on a RAM drive. The SOC 30 may then apply post-processing to the upload statistics to determine a representative upload broadband speed. In other embodiments, test files may be uploaded to more than one remote network server. Any of the processing methods described with respect to the processing of the download statistics may be used to process the upload statistics. Processing the upload statistics may comprise a median, mode or average of the measurements of upload volume.

By using Wget on the SOC 30, the present system may provide an efficient broadband test method with a low memory and processing requirement. The broadband test method may be integrated into the portable test apparatus 10 with a low space and power requirement.

Some currently-available broadband speed test software is limited by the requirement that it must be useable on a large range of hardware. Each type of computer or processor on which the broadband speed test software is required to run may have a different FIFO with different characteristics. For example, different FIFOs may have different characteristics in how data fills up and passes through the FIFO, and the impact that this filling up process has on the speed characteristics. It may not be feasible for the providers of currently-available broadband test software to write software that is tailored to each hardware configuration. Instead, the software may make assumptions about the hardware characteristics which may not be appropriate to individual hardware configurations.

By contrast, the SOC 30 of the portable test apparatus 10 has a known FIFO that is the same in each portable test apparatus. Therefore it is possible to use an algorithm that is tailored to the FIFO hardware in order to produce a broadband speed value that accurately accounts for speed fluctuations resulting from the FIFO and does not incorrectly attribute such speed fluctuations to the cable network, or produce a value for broadband speed that is unrepresentative. It is possible to profile the TCP/IP stack and the FIFO for the particular hardware used in the portable test apparatus. Profiling the TCP/IP stack may support calibration and may prevent characteristics of the TCP/IP stack from influencing the calculation of broadband speed. Similarly, profiling the FIFO may remove the effect of the FIFO from the broadband speed calculation.

For example, the method of processing the download statistics may use the size, configuration, fill speed, empty speed, buffer delay or any measured or otherwise known characteristic of the buffer. Processing the download statistics may be dependent on any one or more of these characteristics. For example if it is known that the buffer is always going to be 50% slower during the first time interval than during subsequent time interval, the download volume for the first time interval may be adjusted accordingly.

Furthermore, the characteristics of the broadband speed test file delivered from the broadband server may be known, and may be used to tailor the method of processing the download statistics.

If the processing of download statistics uses a filter, for example a smoothing filter such as the Savitsky-Golay filter, the parameters of the filter may be tuned to the FIFO or other buffer. The parameters of the filter may be determined by experiment or by calculation once characteristics of the FIFO or other buffer are known.

By writing the received data to null, there may be no delay resulting from writing the data to memory, which may be the case if the data is written to, for example, flash memory. To achieve an accurate broadband test, it may be desirable to download large files and record the speed at which those large files are downloaded. However, in some systems the limiting factor in the download speed may be the speed at which the data can be written to memory. The present embodiment resolves that issue by writing the data to null.

By creating a RAM drive to store the statistics, the broadband speed test process stores the generated statistical data quickly and efficiently.

Using the RAM drive and writing to null mean that the download is not waiting for the hardware, so a more accurate test is performed than if a substantial time was taken in writing either the broadband speed test files or the statistical data to memory. If the hardware processes were slower, it may result in dropped packets.

At stage 160 of Figure 5, the controller 14 sends the results of all the tests performed in the process of Figure 5 and Figure 7 to a central test server using GSM/GPRS module 18. In the present embodiment, the tests comprises set top box tests, cable modem/router tests and broadband speed tests. In other embodiments, some of the tests may be omitted.

In the present embodiment, the results transmitted to the central test server comprise details of test results (for example, SNR levels, received power levels or RGB pixel values), in addition to a record of whether each test has been passed or failed. For each test, a pass or fail may be indicated by an integer value, for example 1=pass, 2=fail. In other embodiments, only pass or fail details are transmitted without additional test data. However, by sending detailed test data to the central server, the central test server may aggregate information from the testing of many units. For example, the central test server may use broadband speed testing data from all units tested in a particular geographical area to profile the cable network in that area. The central test server may monitor whether certain faults are more common in certain types of set top box 50 or cable modem/router 40. In addition to the information about which units have failed, the central test server may also be able to track any trend of borderline passes, for example.

In the present embodiment, as an alternative to using the GSM/GPRS module 18 to upload data at stage 160, data may be uploaded over a modem/router by FTP transfer. In other embodiments, any suitable method may be used.

Although in the process of Figure 5, the test results are recorded in memory 16 and are not sent to the central test server until the last stage of Figure 5, in alternative embodiments, results for each individual test may be sent to the central test server using the GSM/GPRS module 18 as soon as the individual test is completed. In further embodiments, results for tests performed on multiple units are stored and are uploaded to the central test server as a batch. For example, the test results may be uploaded at the end of the day, for example when the test operator returns to base and connects the portable test apparatus 10 to a fast internet connection.

In the present embodiment, the portable test apparatus 10 stores results in memory 16 until the results are uploaded to the central test server. Memory 16 comprises temporary (volatile) memory which is wiped when the portable test apparatus 10 is powered off. In alternative embodiment, the portable test apparatus 10 stores results in long-term memory. In other embodiments, the portable test apparatus 10 stores each test result in memory until a pass or fail has been determined. For example, the portable test apparatus may store a signal level in memory only until it has been compared with a threshold value.

In the present embodiment, all of the tests of the process of Figure 5 and Figure 7 are performed even if some of the tests are failed, as long as the tests that are failed do not affect the performance of subsequent tests. If, for example, a cable modem/router 40 is found to have one fault, it is possible that the cable modem/router 40 may also have other faults. By finding all faults in one test sequence, it may be possible to fix multiple faults in one unit when the cable modem/router 40 is sent back to a factory for repair and refurbishment. It may be less likely that one fault in the unit is fixed but another fault is missed, and the unit is resupplied to a customer with an unfixed fault. However, in alternative embodiments, the home test may be stopped when one failure is found and the cable modem/router 40 may be sent back to factory with a notification of the one failure. In such an embodiment, a full set of tests may be performed on arrival at the factory.

The automated nature of the testing described with reference to Figure 5 and Figure 7 means that the testing can be performed in situ without requiring a significant level of operator input.

In the embodiment described above with reference to Figure 5 and Figure 7, the operator follows test instructions provided on display screen 20. In alternative embodiments, the operator may follow a set of written instructions. Tests that are described above as having operator input may in alternative embodiments be automated, and tests that are described as automated may in alternative embodiments be performed with operator input.

The availability of a head end 22 within an integrated platform in the home environment provides the opportunity to extend home commodity test coverage to include modem/router and broadband speed testing.

By providing a capability for set top box testing, cable modem/router testing and broadband speed testing in a single portable test apparatus 10, the capabilities of the field technician to diagnose faults with a customer's system are significantly increased. The field technician may be able to distinguish faults in the equipment such as the set top box 50 or cable modem/router 40 from faults in the cable network. By testing in the customer's home, the equipment is tested in the conditions in which a fault was reported to occur, without the possibility of inducing additional faults by transportation. Additionally, if no fault is found, the customer may retain their equipment, including all their customised settings.

Examples of system components have been described in relation to the embodiment of Figures 2 and 4 and alternative embodiments. It will be understood that the various system components can be provided in any suitable combination, and components can be omitted or added depending on the desired functionality of the system. In the present embodiment, test processes are controlled by the controller 14. In alternative embodiments, test processes may be controlled by any component or combination of components. Any stage describing connecting or disconnecting individual cables may in other embodiments comprise connecting or disconnecting connectors that form part of a UUT harness assembly. In some embodiments, connection or disconnection stages may not be required when using a UUT harness assembly and may be omitted. For example, the UUT harness assembly may be connected once at the beginning of a test sequence to a single external port 42 of the portable test apparatus 10, and may not be disconnected from external port 42 until the completion of the test sequence.

Whilst components of the embodiments described herein have been implemented in software, it will be understood that any such components can be implemented in hardware, for example in the form of ASICs or FPGAs, or in a combination of hardware and software. Similarly, some or all of the hardware components of embodiments described herein may be implemented in software or in a suitable combination of software and hardware.

It will be understood that the present invention has been described above purely by way of example, and modifications of detail can be made within the scope of the invention. Each feature disclosed in the description, and (where appropriate) the claims and drawings may be provided independently or in any appropriate combination.

## Claims

1. A portable test apparatus for testing a commodity, the commodity comprising a cable modem, router and/or set top box, wherein the commodity is configured for connection to a cable network, the portable test apparatus comprising a cable modem termination system (CMTS), and an attenuator, wherein
the CMTS is configured to provide a signal to the commodity under test over a connecting cable; and
the attenuator is configured to attenuate the signal level from the CMTS such that when the commodity receives the signal from the CMTS over the connecting cable, at least one characteristic of the signal received over the connecting cable simulates at least one operating signal characteristic of the cable network for connection to which the commodity is configured.

2. An apparatus according to Claim 1, wherein the attenuator comprises a reconfigurable attenuator.

3. An apparatus according to Claim 1 or 2, wherein the attenuator is configured to attenuate the signal level according to at least one attenuation configuration, the or each attenuation configuration representing attenuation as a function of frequency.

4. An apparatus according to Claim 3, wherein the attenuator is configured to attenuate the signal level according to a selected one of a plurality of attenuation configurations.

5. An apparatus according to Claim 4, the apparatus comprising a memory storing the plurality of attenuation configurations.

6. An apparatus according to Claim 4 or 5, wherein each of the plurality of attenuation configurations corresponds to a different modulation scheme.

7. An apparatus according to any of Claims 4 to 6, wherein each of the plurality of attenuation configurations corresponds to a different cable network provider.

8. An apparatus according to any of Claims 4 to 7, wherein the portable test apparatus further comprises a controller, and wherein the controller is configured to select one of the plurality of attenuation configurations automatically based on information received from the commodity.

9. An apparatus according to any of Claims 4 to 8, further comprising a user interface configured to allow a test operator to select one of the stored attenuation configurations.

10. An apparatus according to any of Claims 3 to 9, wherein the or each attenuation configuration is determined for a particular portable test apparatus by calibration specific to that portable test apparatus.

11. An apparatus according to any preceding claim, wherein at least one of a), b) or c):
a) the attenuator comprises an attenuator that is at least partially implemented in software;
b) the attenuator comprises a programmable attenuator;
c) the attenuator is configured to attenuate the signal level over a frequency range of at least 50 MHz to 860 MHz.

12. A method for testing a commodity, the commodity comprising a cable modem, router and/or set top box, wherein the commodity is configured for connection to a cable network, the method comprising:
provide a signal to the commodity under test from a cable modem termination system (CMTS) over a connecting cable, and
attenuating the signal level from the CMTS such that when the commodity receives the signal from the CMTS over the connecting cable, the characteristics of the signal received over the connecting cable simulate at least one operating signal characteristic of the cable network for connection to which the commodity is configured.

13. A computer program product executable to perform a method according to Claim 12 or 15.

14. A portable test apparatus for determining a download speed of a cable modem and/or router connected to a cable network, comprising a processing resource configured to perform a test method, the test method comprising:
connecting to a remote server over the cable network;
downloading a test file from the remote server;
discarding data from the downloaded test file during performance of the test;
acquiring download statistics for the download of the test file, wherein the download statistics comprise a plurality of download measurements, each download measurement associated with a respective time interval;
storing the acquired download statistics to memory, optionally volatile memory; and
determining a download speed by processing the stored download statistics.

15. A method for determining a download speed of a cable modem and/or router connected to a cable network, the method comprising:
connecting to a remote server over the cable network;
downloading a test file from the remote server;
discarding data from the downloaded test file;
acquiring download statistics for the download of the test file, wherein the download statistics comprise a plurality of download measurements, each download measurement associated with a respective time interval;
storing the acquired download statistics to memory, optionally volatile memory; and
determining a download speed by processing the stored download statistics.
